# DEMANDE DE BREVET EUROPEEN

(11) **EP 3 937 280 A1**
(43) Date de publication de la demande: **12.01.2022**
(21) Numéro de dépôt: 21183885.9
(22) Date de dépôt: 06.07.2021
(51) Int. Cl.: H01M 4/88, B01J 21/18, B01J 23/70, B01J 27/24, B01J 31/18, B01J 35/00, B01J 35/10, B01J 37/00, B01J 37/03, B01J 37/08, C07C 209/66, H01M 4/90, H01M 8/1018

(54) **PROCÉDÉ DE PRÉPARATION D'UN MATÉRIAU CARBONÉ POREUX ET AZOTÉ AVEC DOPANT MÉTALLIQUE, NOTAMMENT UTILE À TITRE DE CATALYSEUR POUR LA RÉDUCTION DE L'OXYGÈNE (ORR)**

(30) Priorité: 07.07.2020 FR 2007177
(71) Demandeur: Commissariat à l'Energie Atomique et aux Energies Alternatives, 75015 Paris (FR)
(72) Inventeur: ROIRON, Camille, 38054 GRENOBLE CEDEX 09 (FR); CELLE, Caroline, 38054 GRENOBLE CEDEX 09 (FR); HEITZMANN, Marie, 38054 GRENOBLE CEDEX 09 (FR); JACQUES, Pierre-André, 38054 GRENOBLE CEDEX 09 (FR); SIMONATO, Jean-Pierre, 38054 GRENOBLE CEDEX 09 (FR)
(74) Mandataire: Nony

(57) **Abrégé**

La présente invention concerne un procédé de préparation d'un matériau carboné poreux, azoté et chargé au moins à cœur avec au moins un dopant métallique comprenant au moins les étapes consistant à disposer d'un milieu solvant contenant en solution, au moins un aldéhyde, un dérivé hydroxybenzène le cas échéant substitué, et un composé hydrocarboné polymérisable et source en atomes d'azote, et en outre au moins un précurseur métallique dudit dopant métallique, ledit précurseur métallique possédant au moins un métal de transition coordonné à au moins un macrocycle aromatique azoté, activer une polymérisation sol-gel au niveau dudit milieu solvant pour former un hydrogel de carbone azoté contenant au moins à cœur dudit précurseur métallique, disposer d'une forme sèche dudit hydrogel de carbone azoté, pyrolyser ladite forme sèche en atmosphère non oxydante pour former ledit matériau carboné poreux, azoté et chargé au moins à cœur et le récupérer.

## Description

### Domaine technique

La présente invention concerne un procédé de fabrication d'un matériau carboné poreux et azoté avec dopant métallique, tout particulièrement intéressant pour son efficacité catalytique sur la réduction de l'oxygène (ORR) et donc utile dans un système de pile à combustible à membrane échangeuse de protons (PEMFC).

### Technique antérieure

Les piles à combustible à membrane échangeuse de protons (PEMFC) représentent aujourd'hui des dispositifs de conversion d'énergie de grand intérêt au regard de leur efficacité en termes de conversion, de leur importante densité d'énergie et de leur faible impact sur l'environnement. Malheureusement, elles mettent généralement en œuvre à titre d'espèce catalytique des métaux nobles et donc coûteux et rares. Ainsi, le catalyseur de référence pour la réduction de l'oxygène (ORR) est du platine sur carbone (Pt/C) avec un chargement d'environ 20% massique en platine. Il est donc nécessaire d'identifier des matériaux catalytiques alternatifs à faible coût et présentant une activité catalytique du même ordre de grandeur ou meilleure, en vue d'accroître le développement de la technologie PEMFC.

De nouveaux catalyseurs ont déjà été élaborés à base de carbone, azote et fer [1] pour la réaction de réduction de l'oxygène (ORR) mais malheureusement leurs performances demeurent insuffisantes comparativement à celles de catalyseurs à base de platine.

Parmi ces catalyseurs à base de métaux non nobles, les inventeurs se sont tout particulièrement intéressés à ceux dits macrocycles métalliques à savoir comprenant une espèce métallique coordonnée à un ou plusieurs macrocycles et qui se révèlent d'intérêt pour la fabrication de sites actifs sans platine. De tels catalyseurs sont notamment décrits dans Zhang *et al.* [1].

Plus précisément, dans Hong *et al.* [2], des aérogels sont formés à partir d'un mélange de phtalocyanine de fer, de graphène oxydé et de nitrure de carbone graphitique, respectivement synthétisés au préalable. Malheureusement, l'aérogel dopé ainsi obtenu possède une surface spécifique insuffisante puisque seulement de l'ordre de 0,1 m²/g. Des phtalocyanines de fer sont également mises en œuvre dans le document Jiang et al. [3], directement comme site actif, accrochées de façon non covalente sur du graphène oxydé afin d'éviter leur agglomération. Toutefois, leur activité catalytique, mesurée en milieu acide, est insuffisante pour les applications visées. Dans le document CN 109659569 [4] il est décrit un matériau à base d'une structure MOF (« *Metal Organic Framework* »), synthétisée directement en présence de phtalocyanine conjuguée à un métal de transition. Le matériau obtenu qui est pulvérulent et non un gel, est ensuite séché par lyophilisation puis pyrolysé en atmosphère neutre pour former un matériau microporeux et non mésoporeux. Compte-tenu de la mise en œuvre de solvants distincts de l'eau, ce procédé s'avère en outre coûteux. En conséquence, les matériaux catalytiques déjà connus ne présentent pas de performances suffisantes pour être mis en œuvre en remplacement du platine sur carbone. D'une manière générale, leur défaut d'efficacité est dû notamment à une surface spécifique insuffisante liée au procédé de fabrication considéré pour l'élaboration de la forme carbonée de ces catalyseurs.

La publication Zion *et al.* [5] propose pour sa part un catalyseur fabriqué à partir de porphyrines de fer substituées par un groupement aniline. Les groupements anilines sont polymérisés avec des aldéhydes aromatiques pour former un réseau tridimensionnel qui est ensuite séché par CO₂-supercritique et pyrolysé à 600°C pendant 2h sous argon. Toutefois, la structure poreuse du matériau ainsi obtenu demeure encore limitée par le réseau de porphyrines formé par polymérisation car n'atteint que 191 m²/g de surface spécifique.

En conséquence et à la connaissance des inventeurs, on ne dispose pas actuellement de catalyseurs à base de carbone, azote et fer aptes à remplacer efficacement les catalyseurs à base de platine notamment dans les piles à combustible à membrane échangeuse de protons (PEMFC) et en particulier de procédé adéquat pour former de tels catalyseurs à partir de précurseurs métalliques comme les macrocycles métalliques.

La présente invention a précisément pour objet de répondre à ces attentes.

Ainsi, la présente invention vise à proposer un procédé permettant d'obtenir des catalyseurs sans platine pour la réduction de l'oxygène dotés d'une efficacité améliorée.

Elle vise en outre à proposer un procédé permettant d'obtenir des catalyseurs possédant une densité élevée de sites actifs dans un matériau poreux.

Elle vise également à proposer un procédé simple, efficace et de bas coût pour la synthèse de catalyseur contenant du carbone, de l'azote et un métal autre que le platine.

Elle vise en outre à proposer un procédé permettant de réaliser en une unique étape le dopage en métal et celui en azote.

La présente invention vise également à proposer un nouveau matériau carboné poreux azoté et dopé avantageusement à cœur en espèce(s) métallique(s) catalytique(s).

Elle vise également à proposer un matériau comportant des sites catalytiques, permettant une puissance améliorée des PEMFC sans platine.

### Exposé de l'invention

Plus précisément, la présente invention concerne un procédé de préparation d'un matériau carboné poreux, azoté et chargé au moins à cœur avec au moins un dopant métallique comprenant au moins les étapes consistant à
(a) disposer d'un milieu solvant contenant en solution, au moins un aldéhyde, un dérivé hydroxybenzène le cas échéant substitué, et un composé hydrocarboné polymérisable et source en atomes d'azote, et en outre au moins un précurseur métallique dudit dopant métallique, ledit précurseur métallique possédant au moins un métal de transition coordonné à au moins un macrocycle aromatique azoté,
(b) activer une polymérisation sol-gel au niveau dudit milieu solvant de l'étape (a) pour former un hydrogel de carbone azoté contenant au moins à cœur dudit précurseur métallique,
(c) disposer d'une forme sèche dudit hydrogel de carbone azoté formé en étape (b),
(d) pyrolyser ladite forme sèche de l'étape (c) en atmosphère non oxydante pour former ledit matériau carboné poreux, azoté et chargé au moins à cœur avec au moins un dopant métallique et le récupérer.

Avantageusement, le matériau carboné poreux, azoté et chargé au moins à cœur avec au moins un dopant métallique est un aérogel, cryogel ou xérogel, de préférence un aérogel ou un cryogel.

En particulier, le procédé selon l'invention met en œuvre un précurseur métallique dont le métal de transition est différent du platine.

Contre toute attente, les inventeurs ont ainsi constaté qu'il est possible d'accéder à partir de métaux de transition coordonnés à au moins un macrocycle aromatique azoté à des catalyseurs carbonés poreux dotés à la fois d'une surface spécifique et d'une densité de sites catalytiques accrues de même que d'une activité catalytique augmentée. L'utilisation de macrocycles aromatiques azotés améliore manifestement l'immobilisation de l'atome de métal de transition, notamment de fer, au sein d'une structure favorable à la fabrication de sites catalytiques très actifs.

Les inventeurs ont ainsi mis au point un procédé de préparation original pour l'élaboration de tels catalyseurs. Ce procédé est avantageux à plusieurs titres. Il est simple et rapide de mise en œuvre. Il rend manifestement possible la formation de sites actifs à partir de la quasi-totalité de l'espèce catalytique incorporée. Enfin, la mise en œuvre lors de cette synthèse, d'un composé hydrocarboné source en atomes d'azote permet de renforcer l'activité catalytique du matériau poreux dopé obtenu. Les inventeurs ont en effet observé, de façon surprenante, une synergie entre le précurseur métallique du procédé et le composé hydrocarboné polymérisable et source en atomes d'azote, en particulier la mélamine.
Un matériau carboné poreux, azoté conforme à l'invention possède ainsi une porosité élevée, qui est fortement chargée en dopant métallique formant des sites catalytiques jusqu'au cœur de la structure carboné poreuse, et offre une bonne accessibilité à ses nombreux sites catalytiques. Grâce à ces spécificités, il possède des performances électrochimiques très avantageuses. Un tel matériau permet en particulier de produire de forts courants à de faibles surtensions.

La présente invention vise en outre un matériau carboné poreux, azoté et chargé au moins à cœur avec au moins un dopant métallique obtenu selon le procédé de l'invention.
En particulier, ce matériau carboné poreux, azoté et chargé au moins à cœur avec au moins un dopant métallique se présente sous la forme d'un aérogel, cryogel ou xérogel, de préférence un aérogel ou un cryogel. Il possède de préférence une surface spécifique appréciée selon la méthode BET supérieure à 300 m²/g, notamment allant de 300 m²/g à 800 m²/g, voire de 555 m²/g à 800 m²/g.

Ce matériau peut également être caractérisé par sa teneur en azote qui est avantageusement d'au moins 2% en masse et en particulier de 5% à 15 %, voire de 6% à 10%, en masse par rapport à la masse totale dudit matériau.

Selon un autre de ses objets, la présente invention se rapporte à l'utilisation d'un matériau carboné poreux, azoté et chargé au moins à cœur avec au moins un dopant métallique conforme à l'invention, à titre de catalyseur, notamment de catalyseur autosupporté, pour la réduction de l'oxygène (ORR).

Selon encore un autre de ses objets, la présente invention se rapporte à l'utilisation d'un matériau carboné poreux, azoté et chargé au moins à cœur avec au moins un dopant métallique conforme à l'invention, à titre de matériau cathodique dans un système de pile à combustible à membrane échangeuse de protons (PEMFC). Ce matériau permet avantageusement une bonne accessibilité des sites actifs dans un système de pile à combustible.

Un matériau selon l'invention peut notamment être mis en œuvre comme catalyseur de cathode pour pile à combustible à membrane échangeuse de proton, par exemple pour une utilisation en transport léger de type voiture.

### Brève description des dessins

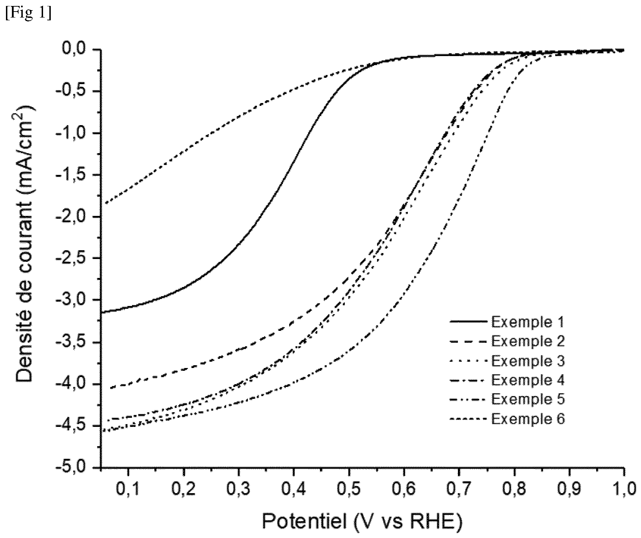

[Fig 1] illustre les performances électrochimiques de cryogels conformes et non conformes à l'invention préparés en exemples 1 à 6.

### Description détaillée

Comme il ressort de ce qui précède, la structure carbone/azote formant le matériau carboné selon l'invention est réalisée par polymérisation sol-gel en présence d'un précurseur du dopant métallique.

Cette réaction de polymérisation sol-gel ou encore de polycondensation est réalisée par mise en présence d'au moins un aldéhyde, un dérivé hydroxybenzène et un composé hydrocarboné source en atomes d'azote dans des conditions propices au déclenchement de la réaction.

En particulier, le milieu solvant en étape (a) comprend au moins un aldéhyde choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde, et leurs mélanges, de préférence parmi le formaldéhyde, l'éthanal, le propanal et leurs mélanges, et plus préférentiellement comprend au moins le formaldéhyde. L'aldéhyde peut également y être généré à partir d'une forme dite précurseur, par exemple un acétal ou hémiacétal.

Le dérivé hydroxybenzène dit encore « hydroxybenzène » désigne au sens de l'invention un composé chimique constitué d'un cycle benzène porteur d'au moins une fonction hydroxyle, de préférence deux fonctions hydroxyles et pouvant être en outre substitué, notamment par une fonction carboxylique, amide et/ou un radical alkyle en C₁ à C₃. Avantageusement, le dérivé hydroxybenzène est apte à réagir selon une réaction de polymérisation sol-gel. Le milieu solvant en étape (a) comprend notamment au moins un dérivé hydroxybenzène choisi parmi le phénol, le résorcinol, le catéchol, l'acide di-hydroxy-4-méthylbenzoïque, le 2,6-dihydroxybenzamine, l'acide dihydroxybenzoïque et leurs dérivés et leurs mélanges, de préférence parmi le résorcinol et ses dérivés, et plus préférentiellement comprend au moins le résorcinol.

Le composé hydrocarboné source en atomes d'azote est polymérisable. En particulier, il comprend au moins deux fonctions amines primaires et/ou secondaires, et plus préférentiellement primaires. Avantageusement, le composé hydrocarboné polymérisable et source en atomes d'azote, encore nommé composé hydrocarboné source en atomes d'azote, est apte à réagir selon une réaction de polymérisation sol-gel. En particulier, le composé hydrocarboné source en atomes d'azote est différent d'un macrocycle aromatique azoté notamment tel que défini ci-après. En particulier, le milieu solvant en étape (a) comprend au moins un composé hydrocarboné source en atomes d'azote choisi parmi les composés aliphatiques et/ou aromatiques substitués par des fonctions amines primaires ou secondaires et leurs dérivés, et comprend de préférence au moins 2 atomes de carbone, notamment de 2 à 20 atomes de carbone. Le milieu solvant en étape (a) peut notamment comprendre au moins un composé hydrocarboné source en atomes d'azote choisi parmi les dérivés de la triazine, de la phénantroline, de la pyridine et de la pyrazine, et de préférence comprend au moins la mélamine.

La combinaison d'un aldéhyde, d'un dérivé hydroxybenzène et d'un composé hydrocarboné source en atomes d'azote permet avantageusement, lors de la polymérisation sol-gel, d'intégrer les atomes d'azote du composé hydrocarboné source en atomes d'azote dans une structure polymérique comprenant également des unités issues du dérivé hydroxybenzène. Avantageusement, le ou les dérivé(s) hydroxybenzène et le ou les aldéhyde(s) sont mis en présence dans un rapport molaire dérivé(s) hydroxybenzène / aldéhyde(s) variant de 0,05 à 2,0, de préférence de 0,1 à 1,0, et plus préférentiellement de 0,2 à 0,4. Avantageusement, le ou les dérivé(s) hydroxybenzène et le ou les composé(s) hydrocarboné(s) source(s) en atome d'azote sont mis en présence dans un rapport molaire dérivé(s) hydroxybenzène / composé(s) hydrocarboné(s) variant de 0,2 à 5,0, de préférence de 0,5 à 2,0, et plus préférentiellement de 0,8 à 1,3.

Selon un mode de réalisation préféré, la polymérisation sol-gel met en présence du formaldéhyde, de la mélamine et du résorcinol.

Comme requis selon l'invention, la polymérisation sol-gel, ou encore polycondensation, est initiée et réalisée en présence d'au moins un précurseur métallique de dopant métallique, qui possède au moins un métal de transition coordonné à au moins un macrocycle aromatique azoté, également nommé métallomacrocycle.

En particulier, les métallomacrocycles aromatiques mis en œuvre dans le procédé comportent un macrocycle aromatique azoté dont les atomes d'azote sont coordonnés au métal de transition.

Par macrocycle aromatique, on entend un composé organique dont au moins une partie des électrons sont délocalisés, la délocalisation faisant intervenir au moins 12 électrons en commun, de préférence au moins 16 électrons en commun. Ce caractère aromatique confère à ces macrocycles une stabilité thermodynamique importante.

Le macrocycle aromatique azoté, c'est-à-dire sans l'atome métallique, possède une masse moléculaire comprise entre 100 et 5000 g/mol, de préférence entre 200 et 2000 g/mol.

La proportion massique en azote présente dans le macrocycle aromatique azoté, c'est-à-dire sans l'atome métallique, est comprise entre 3 et 80% en poids, de préférence entre 5 et 50%, de préférence entre 8 et 40%.

En particulier, le macrocycle aromatique azoté est choisi parmi les phtalocyanines, les porphyrines, les chlorines, et les corrines, substituées ou non, de préférence parmi les phtalocyanines et les porphyrines, substituées ou non.

Avantageusement, le macrocycle aromatique azoté est hydrosoluble ou hydrodispersible et de préférence hydrosoluble.

Selon un mode de réalisation préféré, le macrocycle aromatique azoté est substitué par des groupements hydrophiles. De tels groupements sont avantageux pour faciliter la dispersion ou la dissolution du métallomacrocycle dans le milieu solvant, notamment dans l'eau. En particulier, le macrocycle aromatique azoté est substitué par au moins une fonction choisie parmi les fonctions anioniques, cationiques et hydrophiles électriquement neutres. Parmi les fonctions anioniques peuvent être citées les fonctions sulfonates, carboxylates et phosphonates. A titre d'exemple de fonctions cationiques peuvent être citées les fonctions alkylammonium, pyridinium et imidazolinium. Les fonctions hydrophiles électriquement neutres peuvent être notamment choisies parmi les fonctions acides sulfoniques, carboxyliques, phosphoniques, ou parmi les chaines de type polyethylèneglycol et leurs dérivés.

La mise en œuvre de macrocycles aromatiques azotés permet avantageusement une immobilisation optimisée du métal de transition, notamment de l'atome de fer, au sein d'une structure favorable à la fabrication de sites catalytiques très actifs.

Le métal de transition peut être choisi parmi le manganèse (Mn), le cobalt (Co), le titane (Ti), le fer (Fe), le ruthénium (Ru), l'osmium (Os), le nickel (Ni), le cuivre (Cu), et le zinc (Zn), de préférence parmi le manganèse (Mn), le cobalt (Co), et le fer (Fe), et plus préférentiellement est le fer (Fe).

Le métal peut être présent à n'importe quel degré d'oxydation selon le choix du métal de transition mis en œuvre. Par exemple, lorsque le métal de transition mis en œuvre est l'atome de fer, il peut se trouver dans le métallomacrocycle à un degré d'oxydation 0, +2 ou +3. Le métal peut être coordonné en outre, de manière covalente ou non, à une ou plusieurs entités chimiques distinctes d'un macrocycle aromatique azoté, par exemple à au moins une molécule de dioxygène, un atome d'halogène ou un hétéroatome d'un dérivé thiol, pyrrolidine, pipéridine, alcool ou éther.

Selon un mode de réalisation particulier, le métallomacrocycle aromatique azoté peut être choisi parmi les phtalocyanines substituées hydrosolubles ou non substituées coordonnant un métal de transition, et les porphyrines substituées ou non, de préférence substituées, coordonnant un métal de transition, le métal de transition étant notamment le fer.

De préférence, le métallomacrocycle aromatique azoté est choisi parmi les composés de formule (A), (B) et (C) :

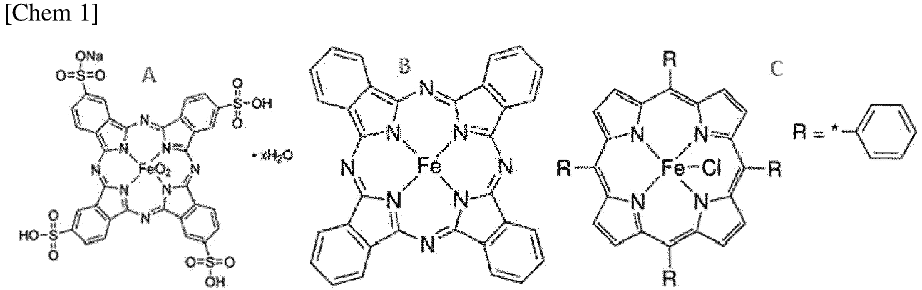

La quantité en métallomacrocycles aromatiques dans le milieu solvant en étape (a) est ajustée pour obtenir un taux de charge suffisant au niveau du matériau carboné poreux azoté obtenu par le procédé, et pour conditionner son efficacité à titre de catalyseur pour la réaction de réduction de l'oxygène. En particulier, le précurseur métallique et le ou les composé(s) hydrocarboné(s) polymérisable(s) et source(s) en atome d'azote sont mis en présence dans un rapport molaire macrocycle aromatique azoté / composé(s) hydrocarboné(s) variant de 0,001 à 1,0, de préférence de 0,005 à 0,5.

Les composés mis en œuvre dans le procédé sont formulés dans un solvant apte à les disperser voire solubiliser, si nécessaire avec chauffage.

Ce solvant est de préférence un milieu aqueux. Il peut notamment être l'eau ou un milieu hydroalcoolique. En particulier, le milieu hydroalcoolique est un mélange d'eau et d'un ou plusieurs alcools dans des proportions variables.

La dissolution des hydroxybenzène et composé hydrocarboné source en atomes d'azote, voire des aldéhydes, et la dispersion ou la dissolution du ou des métallomacrocycle(s) aromatique(s) azoté(s) dans le milieu solvant peut être obtenue par chauffage de ce milieu solvant les contenant, en particulier à une température variant de 60°C à 80°C.

En particulier, le milieu solvant en étape (a) comprend en outre au moins un catalyseur de la polymérisation, plus particulièrement un sel de sodium, notamment du carbonate de sodium. Le catalyseur permet avantageusement de déclencher la réaction de polymérisation sol-gel. La polymérisation sol-gel est avantageusement réalisée à une température d'environ 85°C. En particulier, l'activation en étape (b) peut être réalisée en exposant ledit milieu solvant de l'étape (a) à une température variant de 60°C à 95°C, et de préférence de 80°C à 90°C.

A l'issue de la polymérisation, il est obtenu un hydrogel carbone/azote au sein duquel sont incorporés des métallomacrocycles aromatiques azotés. La présence de ces métallomacrocycles dans l'hydrogel est avantageusement propice à la formation de sites catalytiques de forte activité.

Comme énoncé ci-dessus, cet hydrogel est ensuite séché.

Selon le mode de séchage retenu, l'hydrogel obtenu en étape (b) est transformé en cryogel, en aérogel ou en xérogel.

Selon une première variante, la forme sèche de l'étape (c) est obtenue par séparation de l'hydrogel obtenu en étape (b) de son milieu solvant, puis séchage de l'hydrogel ainsi isolé, au contact d'un fluide supercritique, notamment de l'eau ou du dioxyde de carbone, en particulier du dioxyde de carbone. Selon cette variante, le séchage transforme l'hydrogel obtenu en étape (b) en un aérogel organique azoté contenant un précurseur de site actif sous la forme d'un métallomacrocycle tel que décrit précédemment. La forme sèche de l'étape (c) est alors dédiée à former un aérogel de carbone azoté et chargé au moins à cœur avec au moins un dopant métallique à l'issue du procédé.

Selon une seconde variante, la forme sèche de l'étape (c) est obtenue par séparation de l'hydrogel obtenu en étape (b) de son milieu solvant, congélation du gel ainsi isolé, notamment au contact d'azote liquide, et lyophilisation dudit gel congelé. Un cryogel organique azoté contenant un précurseur de site actif sous la forme d'un métallomacrocyle peut ainsi être formé. Selon cette variante, la forme sèche de l'étape (c) est alors dédiée à former un cryogel de carbone azoté et chargé au moins à cœur avec au moins un dopant métallique à l'issue du procédé.

Selon une troisième variante, la forme sèche de l'étape (c) est formée par évaporation du solvant de l'hydrogel obtenu en étape (b) à température et pression contrôlées. Par exemple, selon cette variante, la forme sèche peut être formée par réduction de la pression de 10⁵ à 10³ Pa en 5 jours à 60°C dans une étuve, puis par maintien des échantillons à 150 °C et 10³ Pa pendant 3 jours. Selon cette variante, le séchage transforme l'hydrogel obtenu en étape (b) en un xérogel organique azoté contenant un précurseur de site actif sous la forme d'un métallomacrocycle tel que décrit précédemment. La forme sèche de l'étape (c) est alors dédiée à former un xérogel de carbone azoté et chargé au moins à cœur avec au moins un dopant métallique à l'issue du procédé.

Le cryogel, aérogel ou xérogel organique azoté contenant un précurseur de site actif sous la forme d'un métallomacrocycle ainsi obtenu est ensuite pyrolysé pour former respectivement un cryogel, aérogel ou xérogel de carbone azoté. La pyrolyse permet avantageusement de transformer une structure organique en une structure carbonée « graphitique ».

Selon le procédé de séchage du gel, la température et la durée de la pyrolyse, il est possible de contrôler la taille des pores et la structure des matériaux carbonés poreux, azotés dopés obtenus selon l'invention.

Avantageusement, la pyrolyse est réalisée à une température variant de 750°C à 1200°C, notamment de 750°C à 850°C, voire d'environ 800°C.

Elle est notamment réalisée sous atmosphère inerte, en particulier non oxydante, par exemple sous azote ou argon, et de préférence sous argon. Cette atmosphère peut notamment comprendre de l'ammoniac et/ou des composés azotés.

Cette pyrolyse peut être réalisée en imposant une montée et une descente en température par paliers à l'image par exemple du processus décrit dans les exemples ci-après. En particulier, le profil de température peut comprendre une montée en température d'une durée de 2h à 6h, suivie d'une stabilisation en température pendant 1h à 4h, de préférence entre 2h et 3h, puis diminution de la température par l'inertie du four.

Selon un autre de ses aspects, la présente invention vise des matériaux carbonés poreux, azotés et chargés au moins à cœur avec au moins un dopant métallique obtenus selon le procédé de l'invention.

Elle vise en particulier des matériaux carbonés poreux, en particulier mésoporeux, azotés et chargés au moins à cœur avec au moins un dopant métallique se présentant sous la forme d'un aérogel, cryogel ou xérogel. En général, un matériau est dit mésoporeux quand la taille moyenne de ses pores est comprise entre 2 et 50 nm.

Avantageusement, le taux de charge massique en dopants métalliques d'un matériau conforme à l'invention, peut varier de 0,001% à 7%, de préférence de 0,01% à 5%, exprimé en masse d'atomes de métal par rapport à la masse totale dudit matériau. Le taux de charge en dopants métallique peut par exemple être caractérisé par absorption atomique.

Le taux de charge en atomes d'azote peut être d'au moins 2%, de préférence varier de 5% à 15%, et plus préférentiellement de 6% à 10%, exprimé en masse d'atomes d'azote par rapport à la masse totale dudit matériau. Le taux de charge en atomes d'azote peut par exemple être caractérisé par analyse élémentaire.

De préférence, le matériau carboné poreux, azoté et chargé au moins à cœur est dénué de nanoparticules métalliques, notamment de fer, en particulier de diamètre d'au moins 1 nm. Ces matériaux carbonés, poreux possèdent en outre un grand volume de pores, notamment avec une distribution de taille de pores caractérisée par un pic entre 2 et 20 nm.

Ils sont chargés à cœur avec au moins un dopant métallique choisi parmi les métaux de transition manganèse (Mn), cobalt (Co), titane (Ti), fer (Fe), ruthénium (Ru), osmium (Os), nickel (Ni), cuivre (Cu), et zinc (Zn), de préférence manganèse (Mn), cobalt (Co), et fer (Fe). Selon un mode de réalisation préféré, ils sont dopés en atomes de Fer II et/ou Fer III.

En particulier, le matériau carboné poreux, azoté et chargé au moins à cœur selon l'invention est dénué de platine.

Les matériaux carbonés poreux, azotés selon l'invention possèdent avantageusement des sites actifs, ou sites catalytiques, au niveau des dopants métalliques, qui sont accessibles à des réactifs du fait de la porosité élevée du matériau.

Comme illustré en exemples, les matériaux carbonés poreux, azotés selon l'invention ont des performances catalytiques supérieures à celles obtenues lorsque le fer n'est pas introduit sous forme de métallomacrocycle, par exemple lorsque le fer est introduit sous forme de sel.

Les matériaux carbonés poreux, azotés et chargés au moins à cœur avec au moins un dopant métallique conformes à l'invention sont tout particulièrement utiles à titre de catalyseurs pour la réduction de l'oxygène. En particulier, ces matériaux sont utiles à titre de catalyseurs autosupportés pour la réduction de l'oxygène.

Ces matériaux peuvent également être utilisés comme adsorbants, supports de catalyseur avancés et matériaux d'électrode pour supercondensateurs, batteries rechargeables, piles à combustible, etc.

En particulier ils peuvent être utilisés à titre de matériau cathodique dans un système de pile à combustible à membrane échangeuse de protons (PEMFC). Ils peuvent également être utilisés à titre de cathode dans un système de pile à combustible à membrane échangeuse de protons (PEMFC).

### Exemple

### Matériels et Méthodes

La porosité des matériaux est caractérisée par la mesure de leur surface spécifique par la méthode Brunauer-Emmet-Teller (BET) à partir de l'isotherme d'absorption d'azote à 77K des matériaux.

Les performances électrochimiques des matériaux sont évaluées par dépôt (chargement en catalyseur de 0,3 mg/cm²) sur électrode tournante en électrolyte acide (H2SO4 0,1M) avec une contre électrode en titane et une électrode au sulfate mercureux comme référence.

### Exemple 1

### Synthèse d'un cryogel non dopé

0,630 g de Mélamine et 0,550 g de Résorcinol sont ajoutés ensemble dans 52 mL d'eau distillée avec 0,010 g de carbonate de sodium. Le mélange est agité à 70°C jusqu'à complète dissolution des poudres. On ajoute ensuite à la solution 1,622 g d'une solution de formaldéhyde à 37% en masse, en agitant. On chauffe le bain d'huile à 85°C et on laisse sous agitation magnétique à 700 rpm pendant 60 minutes. L'agitation est ensuite arrêtée et le chauffage prolongé pendant 23 h. Le gel formé est lavé deux fois par de l'eau déionisée. La solution aqueuse de surnageant est éliminée et le bloc de gel est plongé dans de l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 2

### Synthèse d'un cryogel non conforme à l'invention car dopé à partir de Fe(NO₃)₃

0,630 g de Mélamine et 0,550 g de Résorcinol sont ajoutés ensemble dans 52 mL d'eau distillée avec 0,010 g de carbonate de sodium. Le mélange est agité à 70°C jusqu'à complète dissolution des poudres. On ajoute ensuite à la solution 1,622 g d'une solution de formaldéhyde à 37% en masse, en agitant. On ajoute ensuite à la solution 0,646 g de Fe(NO₃)₃ en agitant. On chauffe le bain d'huile à 85°C et on laisse sous agitation magnétique à 700 rpm pendant 60 minutes. L'agitation est ensuite arrêtée et le chauffage prolongé pendant 23 h. Le gel formé est lavé deux fois par de l'eau déionisée.

La solution aqueuse de surnageant est éliminée et le bloc de gel est plongé dans l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 3

### Synthèse d'un cryogel dopé à partir de phtalocyanine de fer (III) tétrasulfoné

0,630 g de Mélamine et 0,550 g de Résorcinol sont ajoutés ensemble dans 52 mL d'eau distillée avec 0,010 g de carbonate de sodium et 0,094g de phtalocyanine de fer (III) comportant quatre groupements de type acide sulfonique, représentée en formule 2 ci-dessous. Le mélange est placé à 70°C pendant 1h sous forte agitation pour dissoudre la mélamine et disperser la phtalocyanine respectivement. On ajoute ensuite à la solution 1,622 g d'une solution de formaldéhyde à 37% en masse, en agitant. On chauffe le bain d'huile à 85°C et on laisse sous agitation magnétique à 700 rpm pendant 24h. Le gel formé est lavé deux fois par de l'eau déionisée.

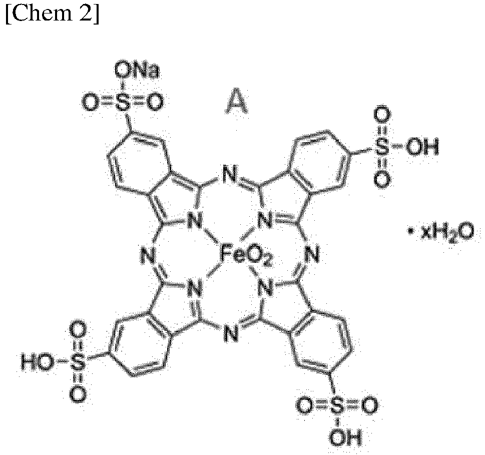

La solution aqueuse de surnageant est éliminée et le bloc de gel est plongé dans l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 4

### Synthèse d'un cryogel dopé à partir de phtalocyanine de fer (II)

0,630 g de Mélamine et 0,550 g de Résorcinol sont ajoutés ensemble dans 52 mL d'eau distillée avec 0,010 g de carbonate de sodium et 0,170 g de phtalocyanine de fer (II), représentée en formule 3 ci-dessous. Le mélange est placé à 70°C pendant 1h sous forte agitation pour dissoudre la mélamine et disperser la phtalocyanine respectivement. On ajoute ensuite à la solution 1,622 g d'une solution de formaldéhyde à 37% en masse, en agitant. On chauffe le bain d'huile à 85°C et on laisse sous agitation magnétique à 700 rpm pendant 24h. Le gel formé est lavé deux fois par de l'eau déionisée.

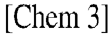

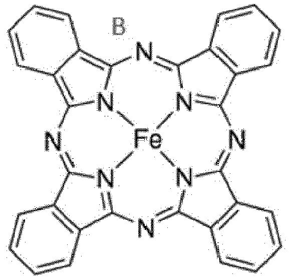

La solution aqueuse de surnageant est éliminée et le bloc de gel est plongé dans l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 5

### Synthèse d'un cryogel dopé à partir de tetraphényl porphyrine

0,630 g de Mélamine et 0,550 g de Résorcinol sont ajoutés ensemble dans 52 mL d'eau distillée avec 0,010 g de carbonate de sodium et 0,070 g de tetraphényl porphyrine, représentée en formule 4 ci-dessous. Le mélange est placé à 70°C pendant 1h sous forte agitation pour dissoudre la mélamine et disperser la porphyrine. On ajoute ensuite à la solution 1,622 g d'une solution de formaldéhyde à 37% en masse, en agitant. On chauffe le bain d'huile à 85°C et on laisse sous agitation à 700 rpm pendant 24h. Le gel formé est lavé deux fois par de l'eau déionisée.

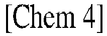

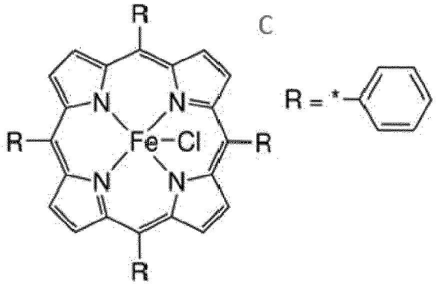

La solution aqueuse de surnageant est éliminée et le bloc de gel est plongé dans l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 6

### Synthèse d'un cryogel non conforme à l'invention sans composé hydrocarboné source en atomes d'azote

1,260 g de Résorcinol est ajouté dans 52 mL d'eau distillée avec 0,010 g de carbonate de sodium et 0,030 g de phtalocyanine de fer (II), représentée en formule 3 ci-dessus. Le mélange est placé à 70°C pendant 1h sous forte agitation pour disperser la phtalocyanine. On ajoute ensuite à la solution 1,622 g d'une solution de formaldéhyde à 37% en masse, en agitant. On chauffe le bain d'huile à 85°C et on laisse sous agitation magnétique à 700 rpm pendant 24h. Le gel formé est lavé deux fois par de l'eau déionisée.

La solution aqueuse de surnageant est éliminée et le bloc de gel est plongé dans l'azote liquide. Quand l'eau du gel est congelée, le gel est mis dans un bocal de lyophilisation et est raccordé au lyophilisateur (0,01 mbar avec condensation à -88°C) pendant 5 jours.

Le cryogel organique est récupéré et placé dans une nacelle en quartz, il est ensuite pyrolysé dans un four tubulaire sous flux d'argon (80 NL/h) avec une pente de 3,3 K/min jusqu'à 800°C puis maintien en température pendant 2h à 800°C avant redescente à température ambiante.

### Exemple 7

### Caractérisation des cryogels obtenus en exemples 1 à 6.

### a) Caractérisation de leur porosité

La surface spécifique de chacun des cryogels obtenus en exemples 1 à 6 est caractérisée selon la méthode détaillée dans le chapitre matériels et méthodes, et reportée en tableau 1. Comme il ressort du tableau 1, la porosité des cryogels conformes à l'invention (exemples 3 à 5) est plus grande que celle d'un cryogel obtenu avec un précurseur métallique dénué d'un macrocycle aromatique azoté (exemple 2), ou d'un cryogel obtenu sans composé hydrocarboné source en atomes d'azote (exemple 6). Ainsi, les cryogels conformes à l'invention offrent une meilleure accessibilité de leurs sites réactionnels.

**[Tableau 1]**

| **Matériau** | **Surface spécifique BET (m²/g)** |
|---|---|
| Exemple 1 | 650 |
| Exemple 2 | 485 |
| Exemple 3 | 558 |
| Exemple 4 | 565 |
| Exemple 5 | 570 |
| Exemple 6 | 533 |

### b) Evaluation de leurs performances électrochimiques

Les performances électrochimiques des cryogels obtenus en exemples 1 à 6 sont évaluées selon la méthode détaillée dans le chapitre matériels et méthodes, et les résultats sont représentés en figure 1.

Les cryogels selon l'invention, obtenus en exemples 3, 4 et 5, sont plus performants que ceux obtenus hors invention en exemples 2, 1 et 6.

### Liste des documents cités

[1] Zhang et al., Electrochimica Acta, 2018, 262, 326-336 ;
[2] Hong et al., Journal of Materials Chemistry A, 2019, 7, 25557 ;
[3] Jiang et al., ACS Catalysis, 2013, 3, 1263-1271 ;
[4] CN 109659569 ;
[5] Zion et al., Angewandte Chemie, 2020, 59, 2483-2489.

## Revendications

1. Procédé de préparation d'un matériau carboné poreux, azoté et chargé au moins à cœur avec au moins un dopant métallique et en particulier dénué de platine, comprenant au moins les étapes consistant à
(a) disposer d'un milieu solvant contenant en solution, au moins un aldéhyde, un dérivé hydroxybenzène le cas échéant substitué, et un composé hydrocarboné polymérisable et source en atomes d'azote, et en outre au moins un précurseur métallique dudit dopant métallique, ledit précurseur métallique possédant au moins un métal de transition coordonné à au moins un macrocycle aromatique azoté,
(b) activer, notamment à une température variant de 60°C à 95°C et de préférence de 80°C à 90°C, une polymérisation sol-gel au niveau dudit milieu solvant de l'étape (a) pour former un hydrogel de carbone azoté contenant au moins à cœur dudit précurseur métallique,
(c) disposer d'une forme sèche dudit hydrogel de carbone azoté formé en étape (b),
(d) pyrolyser ladite forme sèche de l'étape (c) en atmosphère non oxydante, notamment à une température variant de 750°C à 1200°C, pour former ledit matériau carboné poreux, azoté et chargé au moins à cœur avec au moins un dopant métallique et le récupérer.

2. Procédé selon la revendication précédente dans lequel ledit matériau carboné poreux, azoté et chargé au moins à cœur avec au moins un dopant métallique est un aérogel, cryogel ou xérogel.

3. Procédé selon la revendication 1 ou 2, dans lequel ledit macrocycle aromatique azoté est choisi parmi les phtalocyanines, les porphyrines, les chlorines, et les corrines, substituées ou non, et de préférence parmi les phtalocyanines et les porphyrines, substituées ou non.

4. Procédé selon l'une quelconque des revendications précédentes, dans lequel ledit macrocycle aromatique azoté est substitué par au moins une fonction choisie parmi les fonctions anioniques, cationiques et hydrophiles électriquement neutres.

5. Procédé selon l'une quelconque des revendications précédentes dans lequel ledit métal de transition est choisi parmi le manganèse (Mn), le cobalt (Co), le titane (Ti), le fer (Fe), le ruthénium (Ru), l'osmium (Os), le nickel (Ni), le cuivre (Cu), et le zinc (Zn), de préférence parmi le manganèse (Mn), le cobalt (Co), et le fer (Fe), et plus préférentiellement est le fer (Fe).

6. Procédé selon l'une quelconque des revendications précédentes dans lequel le précurseur métallique et le ou les composé(s) hydrocarboné(s) polymérisable(s) et source(s) en atome d'azote sont mis en présence dans un rapport molaire macrocycle aromatique azoté / composé(s) hydrocarboné(s) variant de 0,001 à 1,0, de préférence de 0,005 à 0,5.

7. Procédé selon l'une quelconque des revendications précédentes dans lequel ledit milieu solvant en étape (a) comprend au moins un aldéhyde choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde, et leurs mélanges, de préférence parmi le formaldéhyde, l'éthanal, le propanal et leurs mélanges, et plus préférentiellement comprend au moins le formaldéhyde.

8. Procédé selon l'une quelconque des revendications précédentes dans lequel ledit milieu solvant en étape (a) comprend au moins un dérivé hydroxybenzène choisi parmi le phénol, le résorcinol, le catéchol, l'acide di-hydroxy-4-méthylbenzoïque, le 2,6-dihydroxybenzamine, l'acide dihydroxybenzoïque et leurs dérivés et leurs mélanges, de préférence parmi le résorcinol et ses dérivés, et plus préférentiellement comprend au moins le résorcinol.

9. Procédé selon l'une quelconque des revendications précédentes dans lequel ledit milieu solvant en étape (a) comprend au moins un composé hydrocarboné polymérisable et source en atomes d'azote, ledit composé comprenant au moins deux fonctions amines primaires et/ou secondaires et de préférence étant choisi parmi les composés aliphatiques et/ou aromatiques substitués par des fonctions amines primaires ou secondaires et leurs dérivés, notamment choisi parmi les dérivés de la triazine, de la phénantroline, de la pyridine et de la pyrazine et de préférence comprend au moins la mélamine.

10. Procédé selon l'une quelconque des revendications précédentes dans lequel ladite polymérisation sol-gel met en présence du formaldéhyde, de la mélamine et du résorcinol.

11. Procédé selon l'une quelconque des revendications précédentes, dans lequel la forme sèche de l'étape (c) est dédiée à former un aérogel de carbone azoté et chargé au moins à cœur avec au moins un dopant métallique et est obtenue par séparation de l'hydrogel obtenu en étape (b) de son milieu solvant, puis séchage de l'hydrogel ainsi isolé au contact d'un fluide supercritique.

12. Procédé selon l'une quelconque des revendications 1 à 10 dans lequel ladite forme sèche de l'étape (c) est dédiée à former un cryogel de carbone azoté et chargé au moins à cœur avec au moins un dopant métallique et est obtenue par séparation de l'hydrogel obtenu en étape (b) de son milieu solvant, congélation du gel ainsi isolé et lyophilisation dudit gel congelé.

13. Procédé selon l'une quelconque des revendications 1 à 10 dans lequel la forme sèche de l'étape (c) est dédiée à former un xérogel de carbone azoté et chargé au moins à cœur avec au moins un dopant métallique et est formée par évaporation du solvant de l'hydrogel obtenu en étape (b) à température et pression contrôlées.

14. Matériau carboné poreux, azoté et chargé au moins à cœur avec au moins un dopant métallique obtenu selon l'une quelconque des revendications 1 à 13 possédant une surface spécifique appréciée selon la méthode BET supérieure à 300 m²/g, notamment allant de 300 m²/g à 800 m²/g.

15. Matériau selon la revendication 14 dont le taux de charge massique en dopant métallique varie de 0,001% à 7%, de préférence de 0,01% à 5%, exprimé en masse d'atomes de métal par rapport à la masse totale dudit matériau.

16. Matériau selon l'une quelconque des revendications 14 à 15 chargé à cœur avec au moins un dopant métallique choisi parmi les métaux de transition manganèse (Mn), cobalt (Co), titane (Ti), fer (Fe), ruthénium (Ru), osmium (Os), nickel (Ni), cuivre (Cu), et zinc (Zn), de préférence manganèse (Mn), cobalt (Co), et fer (Fe), et plus préférentiellement dopé en atomes de Fer II et/ou Fer III.

17. Utilisation d'un matériau selon l'une quelconque des revendications 14 à 16 à titre de catalyseur, notamment de catalyseur autosupporté, pour la réduction de l'oxygène.

18. Utilisation d'un matériau selon l'une quelconque des revendications 14 à 16 à titre de matériau cathodique dans un système de pile à combustible à membrane échangeuse de protons (PEMFC).
